# EUROPEAN PATENT SPECIFICATION

(11) **EP 4 238 733 B1**
(45) Date of publication and mention of the grant of the patent: **06.11.2024**
(21) Application number: 22160265.9
(22) Date of filing: 04.03.2022
(51) Int. Cl.: B29C 37/00, B29C 44/34, B29C 44/44, B29C 44/58, B29C 33/30, B29C 45/00, B29C 45/37, B29C 45/56, B29C 45/57, B29C 45/17, B29C 45/26

(54) **APPARATUS FOR MANUFACTURING A COMPONENT FROM A MOLDABLE MATERIAL AND METHOD FOR MANUFACTURING A MOLDING TOOL**
VORRICHTUNG ZUR HERSTELLUNG EINES BAUTEILS AUS EINEM FORMBAREN MATERIAL UND VERFAHREN ZUR HERSTELLUNG EINES FORMWERKZEUGS
APPAREIL DE FABRICATION D'UN COMPOSANT À PARTIR D'UN MATÉRIAU MOULABLE ET PROCÉDÉ DE FABRICATION D'UN OUTIL DE MOULAGE

(43) Date of publication of application: 06.09.2023
(73) Proprietor: JSP International SARL, 60190 Estrées-Saint-Denis (FR)
(72) Inventor: Kendall, Justin, 60190 Estrees St. Denis (FR)
(74) Representative: Hafner & Kohl PartmbB

(56) References cited:
- DE-A1- 102018 202 171
- GB-A- 2 219 413
- JP-A- H05 116 194
- US-A- 2 333 051
- US-A1- 2004 253 337

## Description

Apparatus for manufacturing a component from a moldable material and method for manufacturing a molding tool The invention relates to an apparatus for manufacturing a component from a moldable material, particularly an expandable or expanded polymer bead material, the apparatus comprising a molding tool comprising a cavity defining the shape of the component to be manufactured with the apparatus.

Respective apparatuses for manufacturing a component from a moldable material are generally known from prior art in diverse functional and/or constructive embodiments. Merely as an example, apparatuses for processing expandable or expanded polymer bead materials for manufacturing lightweight polymer components are widely known from prior art.

It is known that manufacturing components with respective apparatuses is typically challenging if the moldable materials to be processed exhibit a deformation behavior during and/or after processing with respective apparatuses. A respective deformation behavior can comprise a shrinkage or warpage behavior, such as a thermal shrinkage or warpage behavior, which requires to design the molding tool respective apparatuses, particularly the cavity of a respective molding tools, in a specific manner to enable at least a partly compensation of respective deformation effects of the moldable material when being processed with respective apparatuses.

This design process of respective molding tools and cavities, respectively is complex and cumbersome because it typically comprises multiple individual steps in which the design of the respective molding tools and cavities, respectively is iteratively changed, e.g. by several additive and/or subtractive processes, to obtain a customized shape of the molding tools and the cavities, respectively which enable at least a partly compensation of respective deformation effects when being processed with respective apparatuses.

Hence, there exists a need to improve respective apparatuses, particularly with respect to the flexibility of changing the configuration of the molding tool and cavity, respectively so as to enable a desired compensation of respective deformation effects when being processed with respective apparatuses.

DE 102018 202 171 A1 discloses a method for producing a component for a motor vehicle.

GB 2 219 413 A1 discloses a packaged lens which comprises a container having a generally cup-shaped body portion.

The object is achieved by an apparatus for manufacturing a component according to independent Claim 1. The Claims depending on independent Claim 1 relate to exemplary embodiments of the apparatus according to independent Claim 1.

A first aspect of the invention relates to an apparatus for manufacturing a component from a moldable material, particularly an expandable or expanded polymer bead material. The apparatus is thus, generally configured for manufacturing a component, i.e. particularly a technical component, from a moldable material. Particularly, the apparatus is configured for manufacturing a component from a moldable material by molding. The apparatus can thus, also be deemed or denoted a molding apparatus.

The apparatus is generally, configured for processing any moldable material which exhibits a deformation behavior when being processed with the apparatus. A respective moldable material which is processable with the apparatus can generally, be a liquid material, a gel-material and/or a solid material before being processed with the apparatus. As far as a respective moldable material is a solid material, the moldable material can be a bulk-material, a fiber-material, or a granulate- or particulate-material, for instance. A respective moldable material which is processable with the apparatus can e.g. be or comprise at least one of: one or more metal (including metal alloys), one or more ceramics, one or more glasses, one or more polymers, such as thermoplastics and/or thermosets. A respective moldable material which is processable with the apparatus can also be a composite material which comprises at least two materials of different chemical and/or physical properties.

According to a concrete exemplary embodiment, a respective moldable material which is processable with the apparatus can be an expandable or expanded polymer bead material. The expandable or expanded polymer bead material typically has a cellular or foamed (micro)structure. The term "expandable" indicates that the material can undergo an expansion when being processed via the apparatus. A respective expansion of the material is typically related with an increase in volume when being processed via the apparatus. The term "expanded" indicates that the material already has undergone a certain expansion before being processed via the apparatus. Yet, it is possible that also a respective expanded material can undergo a (further) expansion when being processed via the apparatus. A respective further expansion of the material is typically related with a further increase in volume when being processed via the apparatus. The term "bead" indicates the loose bead-, granulate-, particulate- or pellet-like structure of the material before fusing. In either case, the term "expandable or expanded polymer bead material" can comprise expandable or expanded co-polymer bead materials. Non-limiting examples of expandable or expanded polymer bead materials which can be processed via the apparatus are expandable or expanded polyester-based bead materials, such as expanded or expandable polycarbonate-based materials (EPC), expanded or expandable polyethylene-terephthalate-based materials (EPET), expanded or expandable polylactic-acid-based materials (EPLA), expandable or expanded polyolefin-based bead materials (EPO-materials), such as expandable or expanded polyethylene-based bead materials (EPE-materials) and/or expandable or expanded polypropylene-based bead materials (EPP-materials), expandable or expanded polyamide-based bead materials (EPA-materials), or expandable or expanded polyurethane-based bead materials (ETPU-materials).

As indicated above, the apparatus is particularly, suitable for processing moldable materials which exhibit a deformation behavior when being processed with the apparatus. A respective deformation behavior can generally refer to a shape- and/or volume-changing behavior. As such, a respective deformation behavior can be a shrinkage and/or warpage behavior, particularly a thermal shrinkage and/or warpage behavior, for instance.

The apparatus is, as will be explained in detail further below, configured to compensate for respective deformation effects caused by a respective deformation behavior of a moldable material when being processed via the apparatus. Respective deformation effects can be of particular significance when respective components have a certain geometric configuration, e.g. when respective components exceed a certain threshold size and/or volume.

The functional and/or constructive setup of the apparatus will be explained in the following:
The apparatus comprises a molding tool. The molding tool comprises a cavity which defines or delimits the geometric configuration, e.g. shape and size, of the component to be manufactured with the apparatus. The cavity is thus, shaped and sized to at least partly, particularly completely, reflect the geometric configuration of the component to be manufactured with the apparatus.

Particularly, the cavity is defined or delimited by at least one molding tool part of the molding tool. The molding tool thus, comprises at least one molding tool part which is configured to define a shaping contour which at least partly, particularly completely, reflects the geometric configuration of the component to be manufactured with the apparatus. Typically, the molding tool comprises two or more respective molding tool parts, wherein each molding tool part is configured to define a shaping contour which at least partly, particularly completely, reflects the geometric configuration of the component to be manufactured with the apparatus. Respective molding tool parts can be deemed or denoted as molding tool halves, for example. At least one respective molding tool part can be moveably supported relative to at least one other molding tool part so as to be moveable in a first orientation and/or position and a second orientation and/or position with respect to the at least one other molding tool part. By moving the at least one molding tool part in a respective first or second orientation and/or position, a respective molding tool can be transferred in an open and/or in a closed state.

The molding tool is typically, provided with further functional and/or constructive features to enable processing of at least one specific moldable material. Referring again to the exemplary embodiment in which the apparatus is configured to process an expandable or expanded polymer bead material, the molding tool, i.e. particularly respective molding tool parts, is/are provided with one or more inlet openings for a process fluid, such as e.g. steam, entering the cavity and/or with one or more outlet openings for a process fluid, such as e.g. steam, for exiting the cavity. Respective inlet openings and/or outlet openings can comprise at least one control element, such as a valve element, configured to selectively open and/or close respective openings. Both respective openings and/or respective control element can be deemed respective functional and/or constructive features of the molding tool. Alternatively or additionally, respective functional and/or constructive features of the molding tool can comprise one or more electromagnetic wave generators configured to generate electromagnetic waves of specific properties, particularly wavelength, such as radiofrequency-waves, microwave, infrared waves, for instance.

The at least one molding tool part (or if the molding tool comprises two or more molding tool parts at least one molding tool part) comprises at least two molding tool part segments each defining or delimiting a cavity (sub-)section. The at least one molding tool part is thus, generally segmented and comprises at least two molding tool part segments each defining or delimiting a specific cavity section. As such, also the cavity of the molding tool is segmented and comprises respective cavity sections defined or delimited by the respective at least two molding tool part segments of the molding tool. The at least two molding tool part segments are typically, adjacently disposed and fixed in a defined spatial orientation and/or position in the operational state of the molding tool part, however, the at least two molding tool part segments can be independently moved relative to each other so as to arrange them in a desired spatial orientation and/or position in non-operational state of the molding tool part.

Respective molding tool part segments are typically, structurally separated molding tool part components. Yet, as will be explained in the following, respective molding tool part segments can be connected with each other via at least one connection member so as to form the at least one molding tool part and the part of the cavity defined or delimited by the at least one molding tool part. When being connected via a respective connection member, the at least two molding tool part segments typically form a continuous molding surface. Possible free spaces, such as gaps, between adjacent molding tool part segments can be closed with respectively shaped portions of respective connection members resulting in a continuous molding surface. As such, respective connection members can, due to their specific geometric configuration, implement at least two functions, namely: first, arrange respective molding tool part segments in a desired orientation and/or position relative to each other which results in a respective cavity configuration and second, close possible gaps between adjacent molding tool part segments so as to assure a desired molding contour and/or molding surface, respectively.

The apparatus thus, comprises at least one connection member configured to connect the at least two molding tool part segments. The at least one connection member can particularly, be configured to mechanically connect the at least two molding tool parts segments. The at least one connection member can thus, comprise one or more mechanical connection interfaces enabling a mechanical connection of the at least one connection member with the at least two molding tool part segments such that the at least two molding tool parts segments are mechanically connectable or connected, e.g. via a bolt- or screw connection, with the at least one connection member. Likewise, connection types other than mechanical connection types, e.g. magnetic connection types, are contemplated herein as well.

The at least one connection member is configured to arrange the at least two molding tool part segments in at least one defined spatial orientation and/or position relative to each other. The at least one connection member thus, not only comprises a mere connection function which allows for that the at least two molding tool part segments can be connected but also comprises an arrangement function which allows for that the at least two molding tool part segments can be arranged in at least one defined spatial orientation and/or position relative to each other. Notably, any change of the spatial orientation and/or position of the at least two molding tool part segments relative to each other accomplished via the at least one connection member will also result in a change of the geometric configuration of the cavity of the molding tool because any change of orientation and/or position of the spatial orientation and/or position of the at least two molding tool part segments relative to each other will also result in a change of the orientation and/or position of respective cavity sections defined by the respective molding tool part segments relative to each other which will change the geometric configuration of the cavity of the molding tool.

As such, the at least one connection member is configured to arrange the at least two molding tool part segments in at least one defined spatial orientation and/or position relative to each other which can result or results in a (desired) cavity configuration which at least partly compensates for deformation effects, particularly for shrinkage and/or warpage effects, more particularly for thermal shrinkage and/or warpage effects, of the moldable material when being molded in the cavity of the molding tool. Particularly, the at least one connection member can be configured to arrange the at least two molding tool part segments in at least one defined spatial orientation and/or position relative to each other which can result or results in a cavity configuration which completely compensates for respective deformation effects of the moldable material when being molded in the cavity.

Hence, by segmenting the at least one molding tool part into at least two molding tool part segments each defining a cavity section and by providing a respective connection member which not only connects the at least two molding tool part segments but, due to its specific geometric configuration, also enables changing the orientation and/or position of the at least two molding tool part segments relative to each other, a cavity configuration can be achieved which compensates for deformation effects of the moldable material when being molded in the cavity. As such, respective cavity configurations for compensating deformation effects of specific moldable materials can be easily obtained e.g. by selecting a specific geometric configuration of the at least one connection member which enables re-arranging the at least two molding tool part segments relative to each other in one or more spatial directions such that machining of the molding tool part is no longer required for obtaining a molding tool design which compensates for respective deformation effects. Likewise, respective cavity configurations for compensating deformation effects of specific moldable materials can be easily obtained by adjusting the geometric configuration of the at least one connection member, e.g. by machining the at least one connection member, which enables re-arranging the at least two molding tool part segments relative to each other in one or more spatial directions such that machining of the molding tool part is no longer required for obtaining a molding tool design which compensates for respective deformation effects. The at least one connection member can thus, comprise one or more machinable portions which are provided for being machined to adjust the geometric configuration of the at least one connection member which, enables re-arranging the at least two molding tool part segments relative to each other in the aforementioned manner.

This also means that a first cavity configuration configured to compensate for deformation effects of a first moldable material when being molded in the cavity and which is based on arranging the at least two molding tool part segments, e.g. via a first connection member and/or connection member of a first geometric configuration, in a first orientation and/or position relative to each other (first spatial arrangement), can be easily changed to a further cavity configuration configured to compensate for deformation effects of a further moldable material when being molded in the cavity by arranging the at least two molding tool part segments, e.g. via a further connection member and/or a connection member of a further geometric configuration, in a further orientation and/or position relative to each other (further spatial arrangement).

Hence, an improved apparatus for manufacturing a component is given, particularly with respect to the flexibility of changing the configuration of the molding tool and cavity, respectively to enable a desired compensation of respective deformation effects when being processed with the apparatus.

The at least one connection member can comprise a base body comprising at least one support portion for supporting a first molding tool part segment in a defined spatial orientation and/or position relative to at least a second molding tool part segment of the at least one molding tool part resulting in the or a respective cavity configuration which compensates for deformation effects of the or a respective moldable material when being molded in the cavity. The at least one connection member can thus, comprise at least one support portion, i. e. a support surface, for stably supporting at least one respective molding tool part segment in a defined spatial orientation and/or position. The at least one support portion can be shaped and sized to provide a stable support of at least one respective molding tool part segment in a defined spatial orientation and/or position. The at least one support portion can be deemed or denoted as the effective portions of the at least one connection member for arranging the at least two molding tool part segments in a desired spatial orientation and/or position relative to each for compensating respective deformation effects of the moldable material. Further, the at least one support portion can be a respective machinable portion of the connection member which can be machined, e.g. by an additive or subtractive process, to change the geometric configuration of the connection member to enable a support of a respective molding tool part segment in a different orientation and/or position.

The at least one support portion of the at least one connection member can generally, be geometrically configured, i.e. particularly shaped and sized, on basis of data relating to a cavity configuration which compensates for deformation effects of the moldable material when being molded in the cavity. Hence, the at least one support portion of the at least one connection member can thus, be geometrically configured on basis of data specifying a defined orientation and/or position of a first molding tool part segment relative to at least one second molding tool part segment which results in a cavity configuration which compensates for deformation effects of the moldable material when being molded in the cavity. Respective data can be derived from historic experiments, simulations, etc. Alternatively or additionally, respective data can be obtained through computer-implemented principles which can include material deformation behavior simulations, for instance.

The at least one connection member can particularly, comprise a first support portion for supporting a first molding tool part segment and at least one second support portion for supporting a second molding tool part segment. Hence, the at least one connection member can comprise separate and thus, separately machinable support portions for supporting specific molding tool part segments. Respective support portions can be individually configured with respect to a specific geometric configuration of a molding tool part segment to be supported and/or with respect to a desired orientation and/or position of a specific molding tool part segment relate to another molding tool part segment. Hence, a first support portion for supporting a first molding tool part segment can be geometrically configured, e.g. by machining, with respect to the geometric configuration of the respective first molding tool part segment and/or with respect to a specific orientation and/or position of the first molding tool part segment (relative to at least one second molding tool part segment). Also, the at least one second support portion for supporting at least one second molding tool part segment can be geometrically configured, e.g. by machining, with respect to the geometric configuration of the respective at least one second molding tool part segment and/or with respect to a specific orientation and/or position of the at least one second molding tool part segment (relative to the first molding tool part segment). Typically, all support portions are shaped to match contact portions, e.g. edge- or rim-portions, of respective molding tool part segments so as to enable a stable support of the molding tool part segments.

A respective first support portion can be arranged in at least one first spatial plane and/or extend in at least one first spatial direction. A respective at least one second support portion can be arranged in at least one second spatial plane equal to or different from the first spatial plane and/or can extend in at least one second spatial direction equal to or different from the at least one first spatial direction. Hence, respective support portions can be arranged in the same spatial plane or in different spatial planes, such as but not limited to spatial planes in a parallel or inclined arrangement relative to each other. Spatial planes generally, can comprise both flat (even) and/or curved planes such that at least one support portion can extend in a flat spatial plane and at least one other support portion can extend in a curved spatial plane. Alternatively or additionally, respective support portions can extend in the same spatial direction or in different spatial directions, such as but not limited to spatial directions in a parallel or inclined arrangement relative to each other. Spatial directions generally, can comprise both straight and/or curved directions such that at least one support portion can extend in a straight spatial direction and at least one other support portion can extend in a curved spatial direction.

Likewise, a respective first support portion can comprise a first cross-sectional geometry, and the at least one second support portion can comprise a second cross-sectional geometry equal to or different from the first cross-sectional geometry. Hence, respective support portions can comprise portions having the same or different cross-sectional geometries. This also includes that the cross-sectional geometry of at least one support portion can change, e.g. along its extension in a specific spatial direction. Respective changes of the cross-sectional geometry of at least one support portion can be implemented by tapers of the at least one connection member in at least one spatial direction, for instance.

It is clear from the above that the geometric configuration of the at least one connection member can be defined (or changed, e.g. by machining) to achieve a desired spatial orientation and/or position of the at least two molding tool part segments relative to each other which results in a respective cavity configuration which compensates for respective deformation effects of a moldable material to be molded in the cavity. Particularly, any geometric parameter of the at least one connection member, such as shape, spatial extension, etc., can be defined (or changed, e.g. by machining) with respect to a desired spatial orientation and/or position of the at least two molding tool part segments relative to each other so as to result in a respective cavity configuration which compensates for respective deformation effects of a moldable material to be molded in the cavity.

According to a more concrete exemplary embodiment, the at least one connection member can at least partly have a T- or T-like-shaped cross-sectional geometry. A respective T- or T-like-shaped cross-sectional geometry can be beneficial since it can provide for step-like shaped support portions for a respective molding tool part segment. As such, a respective T- or T-like-shaped cross-sectional geometry can comprise at least two support portions each defined by a respective freely exposed surface of the (horizontal) cross-portion and a freely exposed surface of the (vertical) longitudinal-portion of the at least one connection member. Alternatively or additionally, only respective freely exposed surfaces of the (horizontal) cross-portion or the (vertical) longitudinal-portion of the at least one connection member can define support portions. This particularly, applies when respective cross-portions or longitudinal-portions are provided with a specific shaping such as a curved or inclined sub-portions, for instance.

According to a more concrete exemplary embodiment, the at least one connection member can have a bar-like basic shape. A bar-like shape can be implemented continuously or discontinuously; hence, the at least one connection member can be built as or comprise a continuous element having an extension in a spatial direction, or can be built as or comprise a plurality of discrete elements each having an extension in a spatial direction. In either case, the at least one connection member can generally have a longitudinal shape having dimensions which can be adapted to the dimensions of at least one portion of at least one molding tool part segment which is to be connected.

Generally, the at least one connection member can comprise at least one connection interface, particularly an opening for receiving a fastening element, such as e.g. a fastening bolt, particularly a threaded fastening bolt, for connecting the at least one connection member with at least one molding tool part segment. As such, connecting a respective connection member with at least one molding tool part segment can comprise securing the molding tool part segments in a specific spatial arrangement and securing the resulting specific configuration of the molding tool part, respectively. A respective opening can be built as a bore which can be provided with threads, for instance. Alternatively or additionally, a respective connection interface can be a fastening element, such as e.g. a fastening bolt, particularly a threaded fastening bolt, integrally formed with the at least one connection member. In analogous manner, at least one of the at least two molding tool part segments can comprise a connection interface, particularly an opening for receiving a fastening element, such as e.g. a fastening bolt, for connecting the respective molding tool part segment with the at least one connection member. If other connection types are implemented, the at least one connection member and/or the at least two molding tool part segments can be accordingly provided with suitable fastening elements, such as magnets, for instance.

The at least one molding tool part comprises a support structure, such as a support frame or support plate, defining a base plane. The support structure is configured to support the at least two molding tool part segments of the respective molding tool part. At least one of the at least two molding tool part segments is fastened to the support structure via a fastening device configured to fasten the at least one molding tool part segment in at least two different orientations and/or positions with respect to the base plane defined by the support structure. Hence, also fastening one or more respective molding tool part segments to the support structure of a respective molding tool part can contribute to an arrangement of the at least two molding tool part segments in a respective orientation and/or position relative to each other which results in a respective cavity configuration which compensates for respective deformation effects of a moldable material when being molded in the cavity. A respective fastening device can comprise at least one first fastening element built as or comprising a bolt of a defined outer diameter and at least one second fastening element built as or comprising an opening provided with the respective molding tool part segment, wherein the opening is configured for receiving the bolt and comprises an inner diameter bigger than the outer diameter of the bolt. The differences in the respective outer and inner diameters enable a specific degree of freedom of motion of the bolt inside the opening which enables adjustments of the orientation and/or position of the respective molding tool part segment relative to the support plate. As such, the differences in the respective outer and inner diameters can enable a float fastening. The fastening device can further comprise at least one third fastening element built as or comprising a bore, e.g. a threaded bore, provided with the support plate, wherein the bore is configured for receiving the bolt and comprises an inner diameter substantially corresponding to the outer diameter of the bolt.

Alternatively or additionally, the at least one molding tool part can comprise a support structure defining a base plane, wherein the support structure is configured to support the at least two molding tool part segments of the respective molting tool part, wherein at least one spacer element which enables modifying the distance, particularly the distance in a direction normal to the base plane of the support structure, between a surface of the base plane of the of the support structure and a surface of a base plane of the respective molding tool part segment.

Typically, at least one respective spacer element is provided between each support structure and each respective molding tool part segment. In either case, a respective spacer element can be embodied as a ring-like element, such as e.g. a washer element, having a defined thickness. However, spacer elements of different thicknesses can be combined. A respective spacer element can form part of a respective fastening device as mentioned above. Typically, each fastening device comprises at least one respective spacer element.

The at least one molding tool part can comprise at least one, particularly rod-like, mounting element for mounting at least one of the at least two molding tool part segments to a mounting structure, such as a mounting frame or a mounting plate, of the respective molding tool part. The at least one mounting element can comprise at least two mounting elements interconnectable or interconnected to provide a mounting element of adjustable dimensions, particularly adjustable longitudinal dimensions. By providing mounting elements of adjustable and thus, variable dimensions different orientations and/or positions of respective molding tool part segments, e.g. particularly different spacings with respect to a base plane of a respective support structure or mounting structure, can be compensated for.

A second aspect of the invention relates to a method for manufacturing a molding tool, particularly a prototyping molding tool, for an apparatus according to claim 1 for manufacturing a component from a moldable material, the molding tool comprising a cavity defining or delimiting the shape of the component to be manufactured with the apparatus. The method comprises the steps of: a) providing a molding tool comprising at least one molding tool part, the at least one molding tool part comprising at two molding tool part segments each comprising a cavity section of the cavity of the molding tool; and b) manufacturing the molding tool by connecting the at least two molding tool part segments with at least one connection member, wherein the at least two molding tool part segments are arranged, via the at least one connection member, in a defined spatial orientation and/or position relative to each other resulting in a cavity configuration which compensates for deformation effects, particularly shrinkage effects, more particularly thermal shrinkage effects, of the moldable material when being molded in the cavity, i.e. particularly during or after molding.

The manufacturing step b) can comprise connecting and fastening respective molding tool part segments in a respective orientation and/or position relative to each other resulting in a respective cavity configuration which compensates for deformation effects of the moldable material when being molded in the cavity of the as-formed molding tool. All remarks regarding the apparatus according to the first aspect of the invention also apply to the method according to the second aspect of the invention and vice versa.

The method according to the second aspect of the invention particularly enables manufacturing prototyping molding tools comprising a cavity configuration which compensates for deformation effects, particularly shrinkage or warpage effects, more particularly thermal shrinkage or warpage effects, of the moldable material when being molded in the cavity. As will be apparent from below, respective prototyping molding tools can be used as a basis for manufacturing a series molding tool. A respective series molding tool can particularly differ from a respective prototyping tool in that it does not comprise segmented molding tool parts. Respective segmented molding tool parts are not required since a desired cavity configuration which compensates for deformation effects of a respective moldable material can be adapted/copied from the prototyping tool.

The arranging of the at least two molding tool part segments in the defined spatial orientation and/or position relative to each other can be achieved on basis of experimental data and/or simulation data indicative of deformation effects of the or a specific moldable material when being molded in the cavity. Hence, data, such as e.g. experimental data and/or simulation data, indicative of deformation effects of the or a specific moldable material when being molded in the cavity can be used to find a suitable orientation and/or position of the at least two molding tool part segments relative to each other which results in a desired cavity configuration which compensates for deformation effects of the moldable material.

A third aspect of the invention relates to a method for manufacturing a molding tool, particularly a series molding tool, for an apparatus for manufacturing a component from a moldable material, the series molding tool comprising a cavity defining or delimiting the shape of the component to be manufactured with the apparatus. The method comprises the steps of: a) providing a molding tool manufactured in accordance with the method of the second aspect of the invention, i.e. particularly a prototyping molding tool; and b) manufacturing a series molding tool based on the configuration of the molding tool provided in step b). The manufacturing step b) can e.g. comprise casting the molding tool or at least one molding tool part of the molding tool, respectively. All remarks regarding the apparatus according to the first aspect of the invention and the method according to the second aspect of the invention also apply to the method according to the third aspect of the invention and vice versa.

A fourth aspect of the invention relates to a molding tool, particularly a series molding tool, manufactured in accordance with a method according to the third aspect of the invention. All remarks regarding the apparatus according to the first aspect of the invention, the method according to the second aspect of the invention, and the method according to the third aspect of the invention also apply to the molding tool according to the fourth aspect of the invention and vice versa.

With these and other advantages and features that will become hereinafter apparent, a more complete understanding of the invention can be obtained by referring to the following description of the appended drawings in which:
Fig. 1 - 4 show principle drawings of a first configuration and a second configuration of a molding tool part of a molding tool of an apparatus according to an exemplary embodiment;
Fig. 5 shows an enlarged view of the detail V of Fig. 1;
Fig. 6 -14 show principle drawings of connection members according to exemplary embodiments;
Fig. 15 -20 show principle drawings of fastening devices for fastening a respective molding tool part segment on a support structure of a molding tool part according to exemplary embodiments;
Fig. 21 shows a principle drawing of a molding tool of an apparatus according to an exemplary embodiment;
Fig. 22 shows a block diagram of a method for manufacturing a prototyping molding tool according to an exemplary embodiment; and
Fig. 23 shows a block diagram of a method for manufacturing a series molding tool according to an exemplary embodiment.

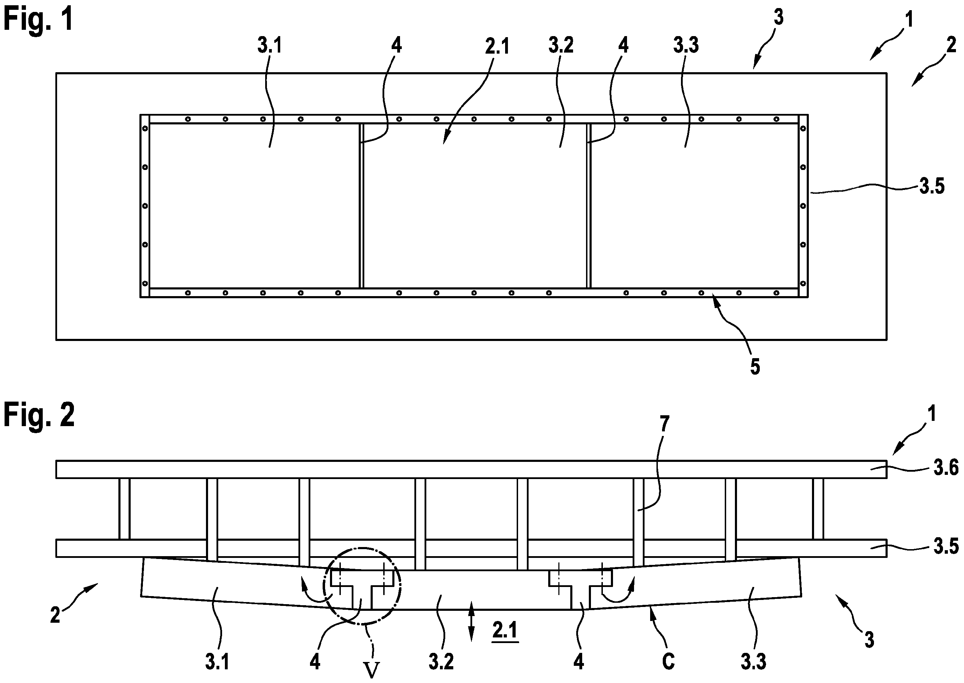

Fig. 1 - 4 show principle drawings of a first configuration and a second configuration of a molding tool part of a molding tool of an apparatus according to an exemplary embodiment

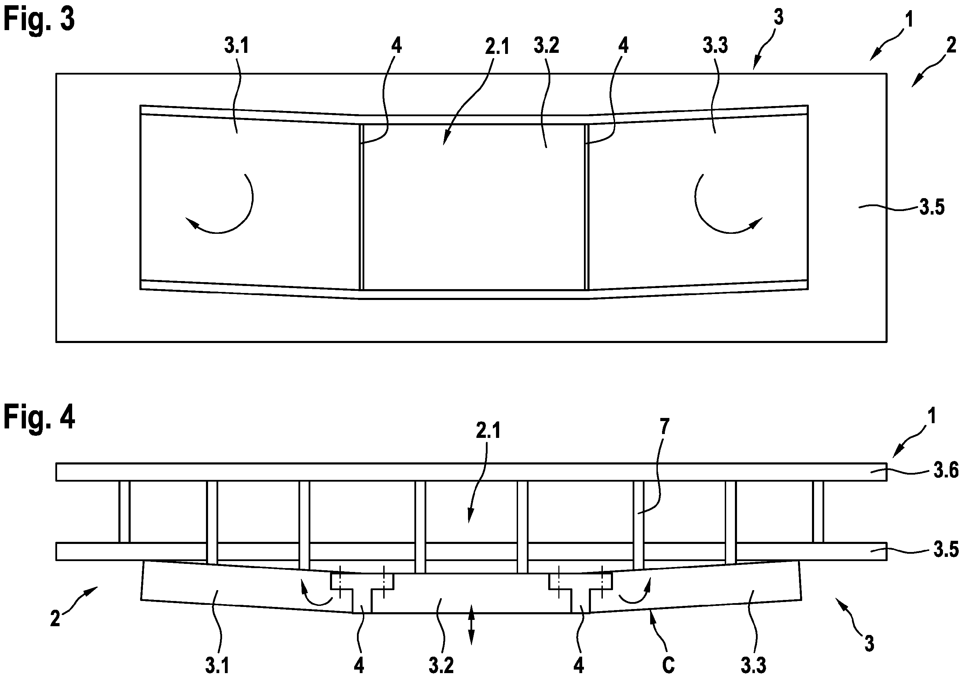

Fig. 1-4 show principle drawings of a first configuration (see Fig. 1, 2) and a second configuration (see Fig. 3, 4) of a molding tool part 3 of a molding tool 2 of an apparatus 1 according to an exemplary embodiment in top-views (see Fig. 1, 3) and side-views (see Fig. 2, 4).

The apparatus 1 comprising the molding tool 2 and the molding tool part 3 is configured for manufacturing a component, i.e. particularly a technical component, from a moldable material which exhibits a deformation behavior, e.g. a shrinkage and/or warpage behavior, when being processed with the apparatus 1. Particularly, the apparatus 1 is configured for manufacturing a component from a moldable material by molding. The apparatus 1 can thus, also be deemed or denoted a molding apparatus.

A respective moldable material which is processable with the apparatus 1 can be an expandable or expanded polymer bead material, for instance. Non-limiting examples of expandable or expanded polymer bead materials which can be processed via the apparatus are expandable or expanded polyester-based bead materials, such as expanded or expandable polycarbonate-based materials (EPC), expanded or expandable polyethylene-terephthalate-based materials (EPET), expanded or expandable polylactic-acid-based materials (EPLA), expandable or expanded polyolefin-based bead materials (EPO-materials), such as expandable or expanded polyethylene-based bead materials (EPE-materials) and/or expandable or expanded polypropylene-based bead materials (EPP-materials), expandable or expanded polyamide-based bead materials (EPA-materials), or expandable or expanded polyurethane-based bead materials (ETPU-materials).

As will be apparent from the further description of the exemplary embodiments shown in the Fig., the apparatus 1 is configured to compensate for respective deformation effects caused by a respective deformation behavior of a moldable material when being processed via the apparatus 1. Respective deformation effects can be of particular significance when respective components have a certain geometric configuration, e.g. when respective components exceed a certain threshold size and/or volume.

The molding tool 2 of the apparatus 1 comprises a cavity 2.1 which defines or delimits the geometric configuration, e.g. shape and size, of the component to be manufactured with the apparatus 1. The cavity 2.1 is thus, shaped and sized to at least partly, particularly completely, reflect the geometric configuration of the component to be manufactured with the apparatus 1.

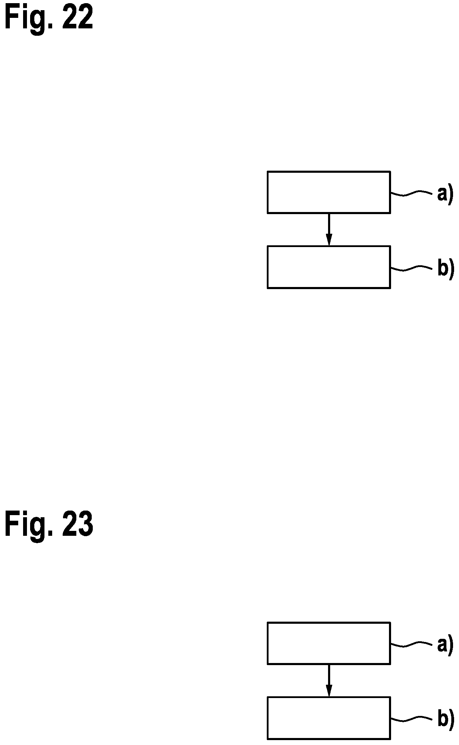

In the exemplary embodiments shown in the Fig., the apparatus 1 comprises a molding tool 2 comprising two molding tool parts 3 wherein each molding tool part 3 is configured to define a shaping contour C which at least partly, particularly completely, reflects the geometric configuration of the component to be manufactured with the apparatus 1. Respective molding tool parts 3 can be deemed or denoted as molding tool halves, for example. As indicated by the double-arrows in Fig. 23, 24, a respective molding tool part 3 can be moveably supported relative to the other molding tool part 3. By moving the molding tool part 3 relative to the other molding tool part 3, the molding tool 2 can be transferred in an open and/or in a closed state.

The molding tool 2 is typically, provided with further functional and/or constructive features to enable processing of at least one specific moldable material. Referring again to the exemplary embodiment in which the apparatus 1 is configured to process an expandable or expanded polymer bead material, the molding tool 2, i.e. particularly respective molding tool parts 3, is/are provided with one or more inlet openings for a process fluid (not shown), such as e.g. steam, entering the cavity 2.1 and/or with one or more outlet openings (not shown) for a process fluid, such as e.g. steam, for exiting the cavity 2.1. Respective inlet openings and/or outlet openings can comprise at least one control element (not shown), such as a valve element, configured to selectively open and/or close respective openings. Both respective openings and/or respective control element can be deemed respective functional and/or constructive features of the molding tool 2. Alternatively or additionally, respective functional and/or constructive features of the molding tool 2 can comprise one or more electromagnetic wave generators configured to generate electromagnetic waves of specific properties, particularly wavelength, such as radiofrequency-waves, microwave, infrared waves, for instance.

As is particularly apparent from Fig. 1 - 4, a respective molding tool part 3 comprises a plurality of molding tool part segments 3.1 - 3.3 each defining or delimiting a cavity (sub-)section. At least one of the molding tool parts 3 is thus, segmented and comprises a plurality of molding tool part segments 3.1 - 3.3 each defining or delimiting a specific cavity section. As such, also the cavity 2.1 of the molding tool 2 is segmented and comprises respective cavity sections defined or delimited by the respective molding tool part segments 3.1 - 3.3 of the molding tool 3. Respective molding tool part segments 3.1 - 3.3 are typically, adjacently disposed and fixed in a defined spatial orientation and/or position in the operational state of the molding tool part 3, however, the molding tool part segments 3.1 - 3.3 can be independently moved relative to each other so as to arrange them in a desired spatial orientation and/or position in non-operational state of the molding tool part 3. In this respect, the embodiments of Fig. 1, 2 and Fig. 3, 4 show different spatial orientation and/or positions of the molding tool part segments 3.1 - 3.3 and related configurations of the molding tool 3.

As is further apparent from Fig. 1 - 4, respective molding tool part segments 3.1 - 3.3 are typically, structurally separated molding tool part components. Yet, as will be explained in the following, the molding tool part segments 3.1 - 3.3 can be connected with each other via connection members 4 so as to form a respective molding tool part 3 and the part of the cavity 2.1 defined or delimited by the respective molding tool part 3. When being connected via connection members 4, the molding tool part segments 3.1 - 3.3 form a continuous molding surface (see Fig. 1 - 4). Particularly, possible free spaces, such as gaps, between adjacent molding tool part segments 3.1 - 3.3 can be closed with respectively shaped portions of respective connection members 4 resulting in a continuous molding surface (see Fig. 1 - 4). As such, respective connection members 4 can, due to their specific geometric configuration, implement at least two functions, namely: arrange respective molding tool part segments 3.1 - 3.3 in a desired orientation and/or position relative to each other and close possible gaps between adjacent molding tool part segments 3.1 - 3.3 so as to assure a desired molding contour C.

The apparatus 1 thus, comprises one or more connection members 4 configured to connect adjacently disposed molding tool part segments 3.1 - 3.3 of a respective molding tool part 3. Respective connection members 4 can be configured to mechanically connect the respective molding tool parts segments 3.1 - 3.3. Respective connection members 4 can thus, comprise one or more mechanical connection interfaces 4.1 enabling a mechanical connection of the respective connection member 4 with one or more molding tool part segments 3.1 - 3.3 such that the molding tool parts segments 3.1 - 3.3 are mechanically connectable or connected, e.g. via a bolt- or screw connection, with the respective connection member 4. Likewise, connection types other than mechanical connection types, e.g. magnetic connection types, are contemplated herein as well.

Respective connection members 4 are also configured to arrange the molding tool part segments 3.1 - 3.3, i.e. particularly (directly) adjacently disposed molding tool part segments 3.1 - 3.3, in at least one defined spatial orientation and/or position relative to each other. Respective connection members 4 thus, not only comprise a mere connection function which allows for that molding tool part segments 3.1 - 3.3. can be connected but also comprises an arrangement function which allows for that molding tool part segments 3.1 - 3.3 can be arranged in at least one defined spatial orientation and/or position relative to each other. Notably, any change of the spatial orientation and/or position of the molding tool part segments 3.1 - 3.3 relative to each other accomplished via respective connection members 4 will also result in a change of the geometric configuration of the cavity 2.1 of the molding tool 2 because any change of orientation and/or position of the spatial orientation and/or position of the molding tool part segments 3.1 - 3.3 relative to each other will also result in a change of the orientation and/or position of respective cavity sections defined by the respective molding tool part segments 3.1 - 3.3 relative to each other which will change the geometric configuration of the cavity 2.1 of the molding tool 2.

As such, the connection members 4 are configured to arrange the molding tool part segments 3.1 - 3.3 in at least one defined spatial orientation and/or position relative to each other which can result or results in a (desired) cavity configuration which at least partly compensates for deformation effects, particularly for shrinkage and/or warpage effects, more particularly for thermal shrinkage and/or warpage effects, of the moldable material when being molded in the cavity 2.1 of the molding tool 2. Particularly, the connection members 4 can be configured to arrange the molding tool part segments 3.1 - 3.3 in at least one defined spatial orientation and/or position relative to each other which can result or results in a cavity configuration which completely compensates for respective deformation effects of the moldable material when being molded in the cavity 2.1.

Hence, by segmenting the molding tool part 3 into a plurality of molding tool part segments 3.1 - 3.3 each defining a cavity section and by providing respective connection members 4 which not only connect the molding tool part segments 3.1 - 3.3 but, due to their specific geometric configuration, also enable changing the orientation and/or position of the molding tool part segments 3.1 - 3.3. relative to each other, a cavity configuration can be achieved which compensates for deformation effects of the moldable material when being molded in the cavity 2.1. As such, respective cavity configurations for compensating deformation effects of specific moldable materials can be easily obtained e.g. by selecting a specific geometric configuration of a respective connection member 4 which enables re-arranging the molding tool part segments 3.1 - 3.3 relative to each other in one or more spatial directions such that machining of the molding tool part 3 is not required for obtaining a molding tool design which compensates for respective deformation effects. Likewise, respective cavity configurations for compensating deformation effects of specific moldable materials can be easily obtained by adjusting the geometric configuration of at least one connection member 4, e.g. by machining the respective connection member(s) 4, which enables re-arranging the molding tool part segments 3.1 - 3.3 relative to each other in one or more spatial directions such that machining of the molding tool part 3 is not required for obtaining a molding tool design which compensates for respective deformation effects. The connection members can thus, comprise one or more machinable portions which are provided for being machined to adjust their geometric configuration which, enables re-arranging the molding tool part segments 3.1 -3.3 relative to each other in the aforementioned manner.

This also means that a first cavity configuration (see e.g. Fig. 1, 2) configured to compensate for deformation effects of a first moldable material when being molded in the cavity 2.1 and which is based on arranging the molding tool part segments 3.1 - 3 3, e.g. via first connection members 4 and/or connection members 4 of a first geometric configuration, in a first orientation and/or position relative to each other (first spatial arrangement), can be easily changed to a further cavity configuration (see e.g. Fig. 3, 4) configured to compensate for deformation effects of a further moldable material when being molded in the cavity 2.1 by arranging the molding tool part segments 3.1 - 3.3, e.g. via further connection members 4 and/or connection members of a further geometric configuration, in a further orientation and/or position relative to each other (further spatial arrangement). The arrows and double-arrows of Fig. 1-4 exemplarily indicate possible degrees of freedom of motions to change orientation and/or position of the molding tool part segments 3.1 - 3 3 which results in different cavity configurations.

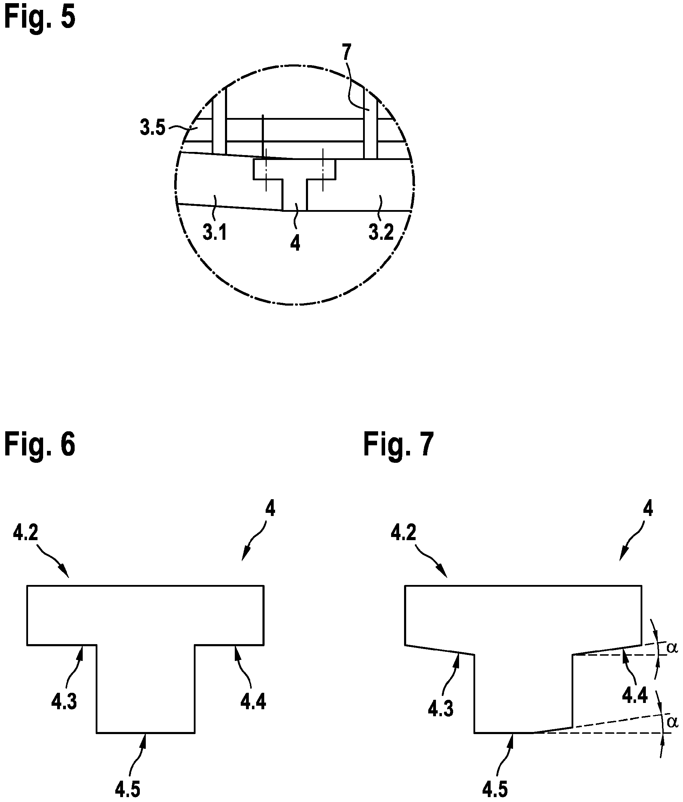

Referring now to Fig. 6 - 14 each showing principle drawings of connection members 4 according to exemplary embodiments, it is apparent that a respective connection member 4 can comprise a base body 4.2 comprising one or more support portion 4.3 - 4.5 for supporting a first molding tool part segment 3.1 in a defined spatial orientation and/or position relative to at least a second molding tool part segment 3.2 resulting in the or a respective cavity configuration which compensates for deformation effects of the or a respective moldable material when being molded in the cavity 2.1. The connection member can thus, comprise one or more support portions 4.3 - 4.5, i. e. support surfaces, for stably supporting at least one respective molding tool part segment 3.1 - 3.3 in a defined spatial orientation and/or position. A respective support portion 4.3 - 4.5 can be shaped and sized to provide a stable support of at least one respective molding tool part segment 3.1 - 3.3 in a defined spatial orientation and/or position and can thus, be deemed or denoted as the effective portions of a respective connection member 4 for arranging the molding tool part segments 3.1 - 3 3 in a desired spatial orientation and/or position relative to each for compensating respective deformation effects of the moldable material. Further, a respective support portion 4.3 - 4.5 can be a respective machinable portion of a respective connection member 4 which can be machined, e.g. by an additive or subtractive process, to change the geometric configuration of the connection member 4 to enable a support of a respective molding tool part segment 3.1 - 3.3 in a different orientation and/or position. In such a manner, respective connection members 4 can implement the aforementioned at least two functions, namely: first, arrange respective molding tool part segments 3.1 - 3.3 in a desired orientation and/or position relative to each other which results in a respective cavity configuration and second, close possible gaps between adjacent molding tool part segments 3.1 - 3.3 so as to assure a desired molding contour C.

Respective support portions 4.3 - 4.5 of a respective connection member 4 can generally, be geometrically configured, i.e. particularly shaped and sized, on basis of data relating to a cavity configuration which compensates for deformation effects of the moldable material when being molded. Hence, respective support portions 4.3 - 4.5 of a respective connection member 4 can thus, be geometrically configured on basis of data specifying a defined orientation and/or position of a first molding tool part segment 3.1 relative to at least one second molding tool part segment 3.2, 3.3 which results in a cavity configuration which compensates for deformation effects of the moldable material when being molded. Respective data can be derived from historic experiments, simulations, etc. Alternatively or additionally, respective data can be obtained through computer-implemented principles which can include material deformation behavior simulations, for instance.

As is apparent from Fig. 6 -14, a respective connection member 4 can particularly, comprise a first support portion 4.3 for supporting a first molding tool part segment 3.1 and a second support portion 4.4 for supporting a second molding tool part segment 3.2. Hence, a respective connection member 4 can comprise separate and thus, separately machinable support portions 4.3 - 4.5 for supporting specific molding tool part segments 3.1 - 3.3. Respective support portions 4.3 - 4.5 can be individually configured with respect to a specific geometric configuration of a molding tool part segment 3.1 - 3.3 to be supported and/or with respect to a desired orientation and/or position of a specific molding tool part segment 3.1 - 3.3 relate to another molding tool part segment 3.1 - 3.3. Hence, a first support portion 4.3 for supporting a first molding tool part segment 3.1 can be geometrically configured, e.g. by machining, with respect to the geometric configuration of the respective first molding tool part segment 3.1 and/or with respect to a specific orientation and/or position of the first molding tool part segment 3.1 (relative to at least one second molding tool part segment 3.2, 3.3). Also, the at least one second support portion 4.4 for supporting at least one second molding tool part segment 3.2, 3.3 can be geometrically configured, e.g. by machining, with respect to the geometric configuration of the respective at least one second molding tool part segment 3.2, 3.3 and/or with respect to a specific orientation and/or position of the at least one second molding tool part segment 3.2, 3.3 (relative to the first molding tool part segment 3.1). Typically, all support portions 4.3 - 4.5 are shaped to match contact portions, e.g. edge- or rim-portions, of respective molding tool part segments 3.1 - 3.3. so as to enable a stable support of the molding tool part segments 3.1 - 3.3.

As is further apparent from Fig. 6 - 14, one support portion 4.3 - 4.5 can be arranged in a first spatial plane and/or extend in at least one first spatial direction and another support portion 4.3 - 4.5 can be arranged in at least one second spatial plane equal to or different from the first spatial plane and/or can extend in at least one second spatial direction equal to or different from the at least one first spatial direction. Hence, respective support portions 4.3 - 4.5 can be arranged in the same spatial plane or in different spatial planes, such as but not limited to spatial planes in a parallel or inclined arrangement relative to each other. Spatial planes generally, can comprise both flat (even) and/or curved planes such that at least one support portion 4.3 - 4.5 can extend in a flat spatial plane and at least one other support portion can extend in a curved spatial plane. Alternatively or additionally, respective support portions 4.3 - 4.5 can extend in the same spatial direction or in different spatial directions, such as but not limited to spatial directions in a parallel or inclined arrangement relative to each other. Spatial directions generally, can comprise both straight and/or curved directions such that at least one support portion 4.3 - 4.5 can extend in a straight spatial direction and at least one other support portion 4.3 - 4.5 can extend in a curved spatial direction.

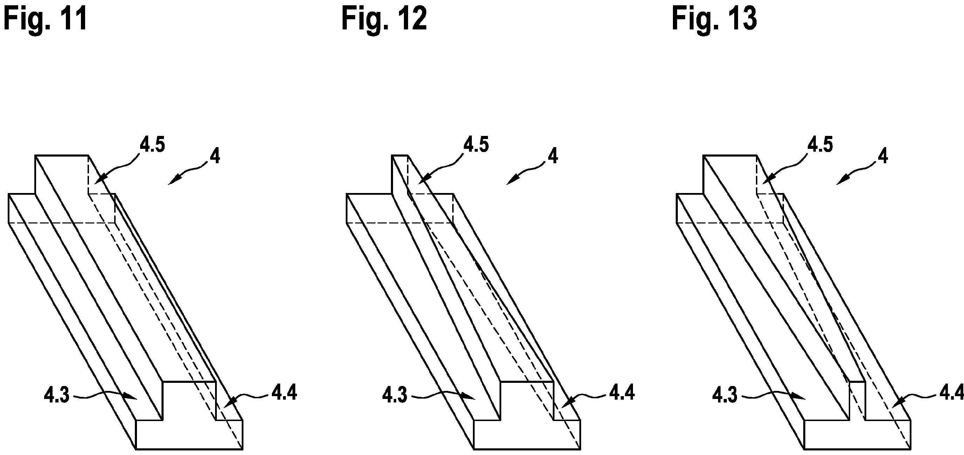

It is particularly apparent from a comparison of Fig. 6, 7 that a respective first support portion 4.3 - 4.5 can comprise a first cross-sectional geometry, and at least one further support portion 4.3 - 4.5 can comprise a second cross-sectional geometry equal to or different from the first cross-sectional geometry. Fig. 7 and Fig. 8-10 show as an example that different cross-sectional geometries can e.g. be achieved e.g. by a slanted shaping of support portions 4.3 - 4.5 (exemplary slanting angles α are indicated in Fig. 7). Hence, respective support portions 4.3 - 4.5 can comprise portions having the same or different cross-sectional geometries. As is apparent from the exemplary embodiments of Fig. 11 - 13, this also includes that the cross-sectional geometry of at least one support portion 4.3 - 4.5 can change, e.g. along its extension in a specific spatial direction. Fig. 11 - 3 particularly show that respective changes of the cross-sectional geometry of at least one support portion 4.3 - 4.5 can be implemented by tapers of a respective connection member 4 in at least one spatial direction, e.g. the longitudinal direction, for instance.

It is clear from the above that the geometric configuration of a respective connection member 4 can be defined (or changed, e.g. by machining) to achieve a desired spatial orientation and/or position of the molding tool part segments 3.1 - 3.3 relative to each other which results in a respective cavity configuration which compensates for respective deformation effects of a moldable material to be molded in the cavity 2.1. Particularly, any geometric parameter of a respective connection member 4, such as shape, spatial extension, etc., can be defined (or changed, e.g. by machining) with respect to a desired spatial orientation and/or position of the molding tool part segments 3.1 - 3.3 relative to each other so as to result in a respective cavity configuration which compensates for respective deformation effects of a moldable material to be molded in the cavity 2.1.

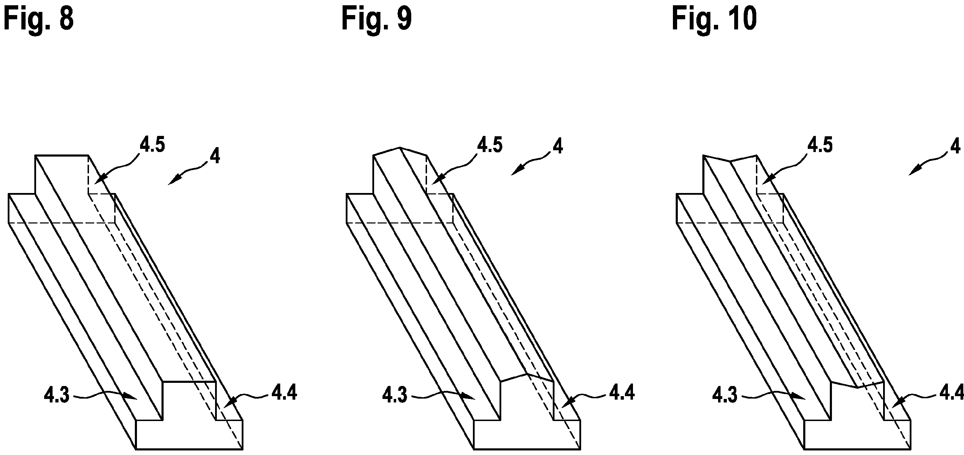

As such, the exemplary embodiments of Fig. 8-13 showing bar-like shaped connection members 4 having a T- or T-like-shaped cross-sectional geometry are only of exemplary nature. Indeed, a respective T- or T-like-shaped cross-sectional geometry can be beneficial since it can provide for step-like shaped support portions 4.3, 4.4 for a respective molding tool part segment 3.1 - 3.3. As such, a respective T- or T-like-shaped cross-sectional geometry can comprise two support portions 4.3, 4.4 each defined by a respective freely exposed surface of the (horizontal) cross-portion and a freely exposed surface of the (vertical) longitudinal-portion of the respective connection member 4. Alternatively or additionally, only respective freely exposed surfaces of the (horizontal) cross-portion or the (vertical) longitudinal-portion of a respective connection member 4 can define support portions. This particularly, applies when respective cross-portions or longitudinal-portions are provided with a specific shaping such as a curved or inclined sub-portions, for instance, such as exemplarily indicated for the support portions 4.5 of Fig. 9 and Fig. 10.

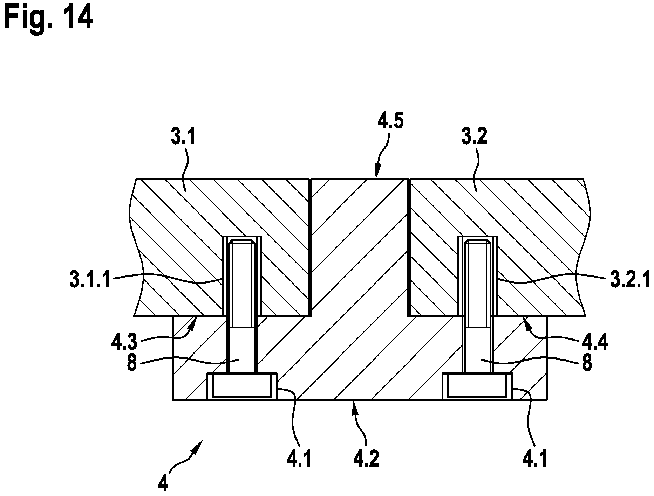

The exemplary embodiment of Fig. 14 generally indicates that a respective connection member 4 can comprise at least one connection interface 4.1, such as an opening for receiving a fastening element 8, such as e.g. a fastening bolt, particularly a threaded fastening bolt, for connecting the connection member 4 with respective molding tool part segments 3.1 - 3.3. As such, connecting a respective connection member 4 with at least one molding tool part segment 3.1 - 3.3 can comprise securing the molding tool part segments 3.1 - 3.3 in a specific spatial arrangement and securing the resulting specific configuration of the molding tool part 3, respectively. A respective opening can be built as a bore which can be provided with threads, for instance. Alternatively or additionally, a respective connection interface 4.1 can be a fastening element, such as e.g. a fastening bolt, particularly a threaded fastening bolt, integrally formed with a respective connection member 4. In analogous manner, at least one molding tool part segment 3.1 - 3.3 can comprise a connection interface 3.1.1 - 3.3.1, particularly an opening for receiving a fastening element, such as e.g. a fastening bolt, for connecting the respective molding tool part segment 3.1 - 3.3 with the connection member 4. If other connection types are implemented, the connection member 4 and/or the molding tool part segments 3.1 - 3.3 can be accordingly provided with suitable fastening elements, such as magnets, for instance.

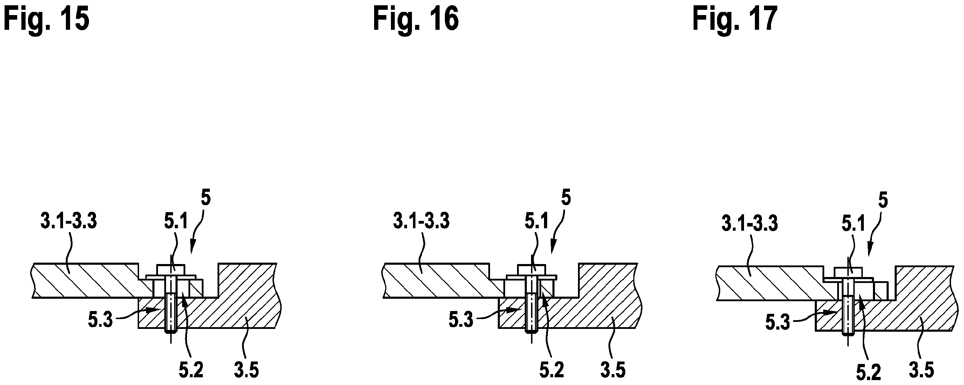

The embodiments of Fig. 1, 3 and Fig. 15 - 17 show that a respective molding tool part 3 comprises a support structure 3.5, such as a support frame or a support plate, defining a base plane. The support structure 3.5 is configured to support the molding tool part segments 3.1 - 3.3 of the respective molding tool part 3 (see Fig. 1, 3). At least one molding tool part segment 3.1 - 3.3 is fastened to the support structure 3.5 via a fastening device 5 configured to fasten the molding tool part segment 3.1 - 3.3 in at least two different orientations and/or positions with respect to the base plane defined by the support structure 3.5. Hence, also fastening of the respective molding tool part segment 3.1 - 3.3 to the support structure 3.5 of a respective molding tool part 3 can contribute to an arrangement of the molding tool part segments 3.1 - 3.3 in a respective orientation and/or position relative to each other which results in a respective cavity configuration which compensates for respective deformation effects of a moldable material when being molded. As is apparent from Fig. 15 - 17, a respective fastening device 5 can comprise at least one first fastening element 5.1 built as or comprising a bolt, e.g. a M8 bolt, of a defined outer diameter and at least one second fastening element 5.2 built as or comprising an opening provided with the respective molding tool part segment 3.1 - 3.3, wherein the opening is configured for receiving the bolt and comprises an inner diameter bigger than the outer diameter of the bolt. The differences in the respective outer and inner diameters enable a specific degree of freedom of motion of the bolt inside the opening which enables adjustments of the orientation and/or position of the respective molding tool part segment 3.1 -3.3 relative to the support structure 3.5. Particularly, Fig. 16 shows an embodiment in which the molding tool part segment 3.1 - 3.3 is moved to the right with respect to the nominal configuration of Fig. 15, and Fig. 17 shows an embodiment in which the molding tool part segment 3.1 - 3.3 is moved to the left with respect to the nominal configuration of Fig. 15. The fastening device 5 can further comprise at least one third fastening element 5.3 built as or comprising a bore, e.g. a threaded bore, provided with the support structure 3.5, wherein the bore is configured for receiving the bolt and comprises an inner diameter substantially corresponding to the outer diameter of the bolt.

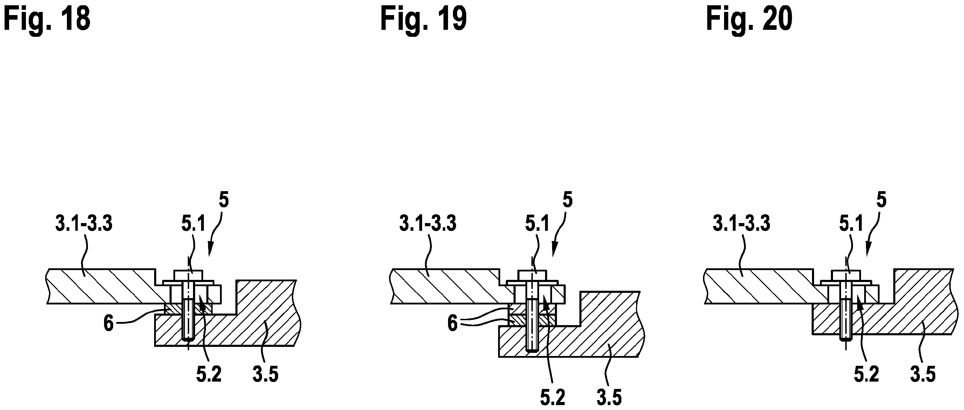

The embodiments of Fig. 1, 3 and Fig. 18 - 20 show that at least one spacer element 6, such as e.g. a washer element, which enables modifying the distance, particularly the distance in a direction normal to the base plane of the support structure 3.5, can be provided between a surface of the base plane of the of the support structure 3.5 and a surface of a base plane of the respective molding tool part segment 3.1 - 3.3. Particularly, Fig. 18 shows an exemplary nominal configuration including one spacer element 6, whereas Fig. 19 shows a modification with two spacer elements 6 arranged on top of each other and Fig. 20 shows a modification with no spacer element. Even though Fig. 18 - 20 show spacer elements 6 of the same thickness, spacer elements 6 of different thicknesses can be combined. A respective spacer element 6 can form part of a respective fastening device 5 as mentioned above. Typically, each fastening device 5 comprises at least one respective spacer element 6 at least in a nominal configuration as exemplarily shown in Fig. 18.

Referring back to Fig. 1 and 3, it is apparent that a respective molding tool part 3 can comprise one or more, particularly rod-like, mounting elements 7 for mounting respective molding tool part segments 3.1 - 3.3 to a mounting structure 3.6, such as a mounting frame or a mounting plate, of the respective molding tool part 3. Respective mounting elements 7 can comprise at least two mounting element segments (not shown) interconnectable or interconnected to provide a mounting element 7 of adjustable dimensions, particularly adjustable longitudinal dimensions. By providing mounting elements 7 of adjustable and thus, variable dimensions different orientations and/or positions of respective molding tool part segments 3.1 - 3.3, e.g. particularly different spacings with respect to a base plane of a respective support structure 3.5 or mounting structure 3.6, can be compensated for.

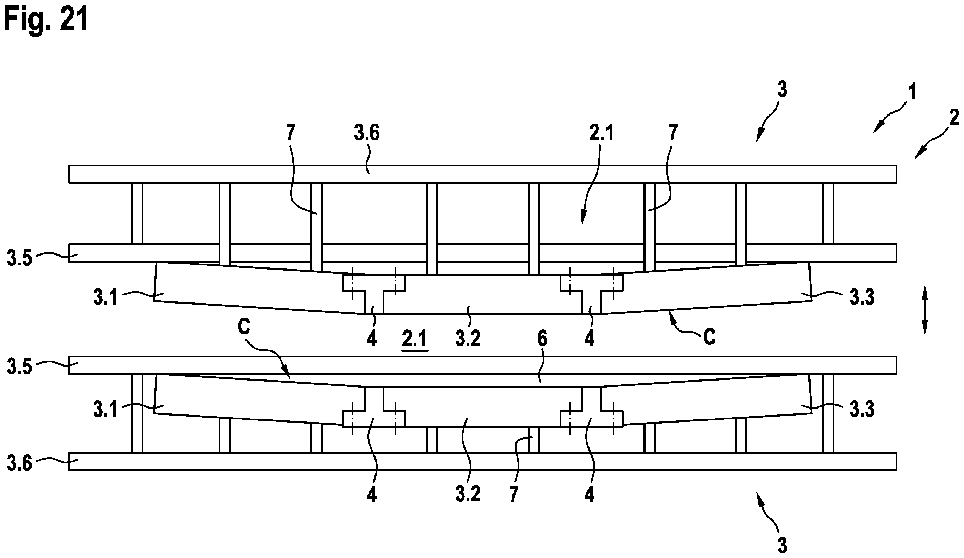

Fig. 21 shows an exemplary embodiment of a molding tool 3 which comprises two respective molding tool parts 3 comprising respectively configured molding tool part segments 3.1 - 3.3. and connection elements 4 and thus, shows that the above explained principle can be applied to more than one molding tool part 3 of a respective molding tool 2 of a respective apparatus 1.

Fig. 22 shows a block diagram of a method for manufacturing a prototyping molding tool according to an exemplary embodiment. The prototyping molding tool could be the molding tool 2 of Fig. 21, for instance.

The method of Fig. 22 comprises: step a) which comprises providing a molding tool 2 comprising at least one molding tool part 3, the at least one molding tool part 3 comprising at two molding tool part segments 3.1 - 3.3 each comprising a cavity section of the cavity 2.1 of the molding tool 2; and b) manufacturing the molding tool 2 by connecting the at least two molding tool part segments 3.1 - 3.3 with at least one connection member 4, wherein the at least two molding tool part segments 3.1 - 3.3 are arranged, via the at least one connection member 4, in a defined spatial orientation and/or position relative to each other resulting in a cavity configuration which compensates for deformation effects, particularly shrinkage effects, more particularly thermal shrinkage effects, of the moldable material when being molded. The manufacturing step b) can comprise connecting and fastening respective molding tool part segments 3.1 - 3.3 in a respective orientation and/or position relative to each other resulting in a respective cavity configuration which compensates for deformation effects of the moldable material when being molded in the cavity 2.1 of the as-formed molding tool 2.

The method of Fig. 22 particularly enables manufacturing prototyping molding tools comprising a cavity configuration which compensates for deformation effects, particularly shrinkage or warpage effects, more particularly thermal shrinkage or warpage effects, of the moldable material when being molded in the cavity 2.1. As will be apparent from the below description of Fig. 23, respective prototyping molding tools can be used as a basis for manufacturing a series molding tool. A respective series molding tool can particularly differ from a respective prototyping tool in that it does not comprise segmented molding tool parts 3. Respective segmented molding tool parts 3 are not required since a desired cavity configuration which compensates for deformation effects of a respective moldable material can be adapted/copied from the prototyping tool.

The arranging of the at least two molding tool part segments 3.1 - 3.3 in the defined spatial orientation and/or position relative to each other can be achieved on basis of experimental data and/or simulation data indicative of deformation effects of the or a specific moldable material when being molded in the cavity 2.1. Hence, data, such as e.g. experimental data and/or simulation data, indicative of deformation effects of the or a specific moldable material when being molded in the cavity 2.1 can be used to find a suitable orientation and/or position of the molding tool part segments 3.1 - 3.3 relative to each other which results in a desired cavity configuration which compensates for deformation effects of the moldable material.

Fig. 23 shows a block diagram of a method for manufacturing a series molding tool according to an exemplary embodiment.

The method of Fig. 23 comprises: step a) which comprises providing a molding tool manufactured in accordance with the method of Fig. 22, i.e. particularly a prototyping molding tool; and b) manufacturing a series molding tool based on the configuration of the prototyping molding tool provided in step b). The manufacturing step b) of the method of Fig 23 can e.g. comprise casting the molding tool 2 or at least one molding tool part 3 of the molding tool 2, respectively.

## Claims

1. Apparatus (1) for manufacturing a component from a moldable material, particularly an expandable or expanded polymer bead material, the apparatus (1) comprising a molding tool (2) comprising a cavity (2.1),
the molding tool (2) comprising at least one molding tool part (3), the at least one molding tool part (3) comprising at least two molding tool part segments (3.1 - 3.3) each comprising a cavity section of the cavity (2.1), wherein
the at least two molding tool part segments (3.1 - 3.3) are connected with at least one connection member (4), wherein
the at least one connection member (4) is configured to arrange the at least two molding tool part segments (3.1 - 3.3) in a defined spatial orientation and/or position relative to each other resulting in a cavity configuration which compensates for deformation effects, particularly due to shrinkage effects, particularly due to thermal shrinkage effects, of the moldable material when being molded in the cavity (2.1), **characterized in that**
the at least one molding tool part (3) comprises a support structure (3.5) defining a base plane, wherein the support structure (3.5) is configured to support the at least two molding tool part segments (3.1 - 3.3), wherein at least one of the at least two molding tool part segments (3.1 - 3.3) is fastened to the support structure (3.5) via a fastening device (5) configured to fasten the at least one molding tool part segment (3.1 - 3.3) in at least two different orientations and/or positions with respect to the base plane defined by the support structure (3.5).

2. The apparatus of Claim 1, wherein the at least one connection member (4) comprises a base body (4.2) comprising at least one support portion (4.3 - 4.5) for supporting a first molding tool part segment (3.1 - 3.3) in a defined spatial orientation and/or position relative to at least a second molding tool part segment (3.1 - 3.3) of the at least one molding tool part (3) resulting in the cavity configuration which compensates for deformation effects of the moldable material when being molded in the cavity (2.1).

3. The apparatus of Claim 2, wherein the at least one support portion (4.3 - 4.5) is shaped on basis of data relating to a defined orientation and/or position of a first molding tool part segment (3.1 - 3.3) relative to at least one second molding tool part segment (3.1 - 3.3) of the at least one molding tool part (3) of a cavity configuration compensates for deformation effects of the moldable material when being molded in the cavity (2.1).

4. The apparatus of Claim 2 or 3, wherein the at least one connection member (4) comprises a first support portion (4.3 - 4.5) for supporting a first molding tool part segment (3.1 - 3.3) and at least one second support portion (4.3 - 4.5) for supporting a second molding tool part segment (3.1 - 3.3).

5. The apparatus of Claim 4, wherein the first support portion (4.3 - 4.5) is arranged in at least one first spatial plane and/or extends in a first spatial direction, and the at least one second support portion (4.3 - 4.5) is arranged in at least one second spatial plane equal to or different from the first spatial direction and/or extends in a second spatial direction equal to or different from the first spatial plane.

6. The apparatus of Claim 4 or 5, wherein the first support portion (4.3 - 4.5) comprises a first cross-sectional geometry, and the at least one second support portion (4.3 - 4.5) comprises a second cross-sectional geometry equal to or different from the first cross-section.

7. The apparatus of any of Claims 4-6, wherein the at least one connection member (4) at least partly has a T- or T-like-shaped cross sectional geometry.

8. The apparatus of any of Claims 4-7, wherein the at least one connection member has a bar-like basic shape.

9. The apparatus of any of Claims 4 - 8, wherein the at least one connection member (4) comprises a connection interface (4.1), particularly an opening for receiving a fastening element, for connecting the at least one connection member (4) with at least one molding tool part segment (3.1 - 3.3).

10. The apparatus of any of the preceding Claims, wherein the at least one molding tool part (3) comprises a support structure (3.5) defining a base plane, wherein the support structure (3.5) is configured to support the at least two molding tool part segments(3.1 - 3.3), further comprising at least one spacer element (6) which enables modifying the distance, particularly the distance in a direction normal to the base plane of the support structure (3.5), between a surface of the base plane of the of the support structure (3.5) and a surface of the base plane respective molding tool part segment (3.1 - 3.3).

11. The apparatus of any of the preceding Claims, wherein the at least one molding tool part (3) comprises at least one, particularly rod-like, mounting element (7) for mounting at least one of the at least two molding tool part segments (3.1 - 3.3) to a mounting structure (3.6), wherein the at least one mounting element (7) comprises at least two mounting element segments interconnectable or interconnected to provide a mounting element (7) of adjustable dimensions, particularly adjustable longitudinal dimensions.

12. Method for manufacturing a molding tool (2), particularly a prototyping molding tool, for an apparatus (1) for manufacturing a component from a moldable material according to Claim 1, the molding tool (2) comprising a cavity (2.1) defining the shape of the component to be manufactured with the apparatus (1), the method comprising the steps of:
a) providing a molding tool (2) comprising at least one molding tool part (3), the at least one molding tool part (3) comprising at least two molding tool part segments (3.1 - 3.3) each comprising a cavity section of the cavity (2.1) of the molding tool (2); and
b) manufacturing the molding tool (2) by connecting the at least two molding tool part segments (3.1 - 3.3) with at least one connection member (4), wherein the at least two molding tool part segments (3.1 - 3.3) are arranged, via the at least one connection member (4), in a defined spatial orientation and/or position relative to each other resulting in cavity configuration which compensates for deformation effects of the moldable material when being molded in the cavity (2.1).

13. Method according to Claim 12, wherein the defined spatial orientation and/or position of the at least two molding tool part segments (3.1 - 3.3) relative to each other is determined on basis of experimental data and/or simulation data indicative of deformation effects, particularly shrinkage effects, more particularly thermal shrinkage effects, of the moldable material when being molded in the cavity (2.1).

14. Method for manufacturing a molding tool (2), particularly a series molding tool, for an apparatus (1) for manufacturing a component from a moldable material, the molding tool comprising a cavity (2.1) defining the shape of the component to be manufactured with the apparatus (1), the method comprising the steps of:
a) providing a molding tool (2) manufactured in accordance with Claim 12 or 13, and
b) manufacturing a molding tool based on the configuration of the molding tool provided in step b).

## Patentansprüche

1. Vorrichtung (1) zum Herstellen eines Bauteils aus einem formbaren Material, insbesondere einem expandierbaren oder expandierbaren Polymerperlenmaterial, wobei die Vorrichtung (1) ein Formwerkzeug (2) mit einem Hohlraum (2.1) umfasst,
das Formwerkzeug (2) mit mindestens einem Formwerkzeugteil (3), das mindestens ein Formwerkzeugteil (3) mit mindestens zwei Formwerkzeugteilsegmenten (3.1 - 3.3) umfasst, die jeweils einen Hohlraumabschnitt des Hohlraums (2.1) aufweisen, wobei
die mindestens zwei Formwerkzeugteilsegmente (3.1 - 3.3) mit mindestens einem Anschlusselement (4) verbunden sind, wobei
das mindestens ein Verbindungselement (4) so konfiguriert ist, dass die mindestens zwei Formwerkzeugteilsegmente (3.1 - 3.3) in einer definierten räumlichen Ausrichtung und/oder Position relativ zueinander angeordnet sind, was zu einer Hohlraumkonfiguration führt, die Verformungseffekte, insbesondere aufgrund von Schrumpfungseffekten, insbesondere aufgrund von thermischen Schrumpfungseffekten, des formbaren Materials beim Formen im Hohlraum (2.1) kompensiert, **dadurch gekennzeichnet, dass**
das mindestens ein Formwerkzeugteil (3) eine Tragstruktur (3.5) aufweist, die eine Grundebene definiert, wobei die Tragstruktur (3.5) so konfiguriert ist, dass sie die mindestens zwei Formwerkzeugteilsegmente (3.1 - 3.3) stützt, wobei mindestens eines der mindestens zwei Formwerkzeugteilsegmente (3.1 - 3.3) über eine Befestigungsvorrichtung (5), die so konfiguriert ist, dass das mindestens ein Formwerkzeugteilsegment (3.1 - 3.3) in mindestens zwei verschiedenen Ausrichtungen und/oder Positionen in Bezug auf die durch die Tragstruktur (3.5) definierte Grundebene befestigt wird, an der Tragstruktur (3.5) befestigt ist.

2. Vorrichtung nach Anspruch 1, wobei das mindestens ein Verbindungselement (4) einen Grundkörper (4.2) aufweist, der mindestens einen Stützabschnitt (4.3 - 4.5) zum Abstützen eines ersten Formwerkzeugteilsegments (3.1 - 3.3) in einer definierten räumlichen Ausrichtung und/oder Position relativ zu mindestens einem zweiten Formwerkzeugteilsegment (3.1 - 3.3) des mindestens einen Formwerkzeugteils (3) aufweist, was zu einer Hohlraumkonfiguration führt, die Verformungseffekte des formbaren Materials beim Formen im Hohlraum (2.1) ausgleicht.

3. Vorrichtung nach Anspruch 2, wobei der mindestens eine Auflageabschnitt (4.3 - 4.5) auf der Grundlage von Daten über eine definierte Ausrichtung und/oder Position eines ersten Formwerkzeugteilsegments (3.1 - 3.3) relativ zu mindestens einem zweiten Formwerkzeugteilsegment (3.1 - 3.3) des mindestens einen Formwerkzeugteils (3) einer Hohlraumkonfiguration ausgebildet ist, um Verformungseffekte des formbaren Materials beim Formen im Hohlraum (2.1) auszugleichen.

4. Vorrichtung nach Anspruch 2 oder 3, wobei das mindestens ein Verbindungselement (4) einen ersten Stützabschnitt (4.3 - 4.5) zum Abstützen eines ersten Formwerkzeugteilsegments (3.1 - 3.3) und mindestens einen zweiten Stützabschnitt (4.3 - 4.5) zum Abstützen eines zweiten Formwerkzeugteilsegments (3.1 - 3.3) umfasst.

5. Vorrichtung nach Anspruch 4, wobei der erste Stützabschnitt (4.3 - 4.5) in mindestens einer ersten räumlichen Ebene angeordnet ist und/oder sich in einer ersten räumlichen Richtung erstreckt und der mindestens eine zweite Stützabschnitt (4.3 - 4.5) in mindestens einer zweiten räumlichen Ebene angeordnet ist, die gleich oder verschieden von der ersten räumlichen Richtung ist und/oder sich in einer zweiten räumlichen Richtung erstreckt, die gleich oder verschieden von der ersten räumlichen Ebene ist.

6. Vorrichtung nach Anspruch 4 oder 5, wobei der erste Stützabschnitt (4.3 - 4.5) eine erste Querschnittsgeometrie aufweist und der mindestens eine zweite Stützabschnitt (4.3 - 4.5) eine zweite Querschnittsgeometrie aufweist, die dem ersten Querschnitt entspricht oder sich von diesem unterscheidet.

7. Vorrichtung nach einem der Ansprüche 4 bis 6, wobei das mindestens ein Verbindungselement (4) zumindest teilweise eine T- oder T-ähnliche Querschnittsgeometrie aufweist.

8. Vorrichtung nach einem der Ansprüche 4 bis 7, wobei das mindestens ein Verbindungselement eine stabartige Grundform aufweist.

9. Vorrichtung nach einem der Ansprüche 4 bis 8, wobei das mindestens ein Verbindungselement (4) eine Verbindungsschnittstelle (4.1), insbesondere eine Öffnung zum Aufnehmen eines Befestigungselements, zum Verbinden des mindestens ein Verbindungselement (4) mit mindestens einem Formwerkzeugteilsegment (3.1 - 3.3) aufweist.

10. Vorrichtung nach einem der vorhergehenden Ansprüche, wobei das mindestens ein Formwerkzeugteil (3) eine Tragstruktur (3.5) aufweist, die eine Grundebene definiert, wobei die Tragstruktur (3.5) so ausgebildet ist, dass sie die mindestens zwei Formwerkzeugteilsegmente (3.1 - 3.3) unterstützt, wobei ferner mindestens ein Abstandselement (6) enthalten ist, das eine Änderung des Abstands, insbesondere des Abstands in einer Richtung, die normal zur Grundebene der Tragstruktur (3.5) ist, zwischen einer Oberfläche der Grundebene der Tragstruktur (3.5) und einer Oberfläche der Grundebene des jeweiligen Formwerkzeugteilsegments (3.1 - 3.3) ermöglicht.

11. Vorrichtung nach einem der vorhergehenden Ansprüche, wobei das zumindest ein Formwerkzeugteil (3) mindestens ein, insbesondere stabartiges, Befestigungselement (7) zur Befestigung mindestens eines der mindestens zwei Formwerkzeugteilsegmente (3.1 - 3.3) an einer Befestigungsstruktur (3.6) aufweist, wobei das mindestens ein Befestigungselement (7) mindestens zwei Montageelementsegmente aufweist, die miteinander verbunden oder verbunden sind, um ein Befestigungselement (7) mit einstellbaren Abmessungen, insbesondere einstellbaren Längsabmessungen, bereitzustellen.

12. Verfahren zum Herstellen eines Formwerkzeugs (2), insbesondere eines Prototyp-Formwerkzeugs, für eine Vorrichtung (1) zum Herstellen eines Bauteils aus einem formbaren Material nach Anspruch 1, wobei das Formwerkzeug (2) einen Hohlraum (2.1) aufweist, der die Form des mit der Vorrichtung (1) herzustellenden Bauteils definiert, wobei das Verfahren die Schritte umfasst:
a) Bereitstellung eines Formwerkzeugs (2), das mindestens ein Formwerkzeugteil (3) umfasst, wobei das mindestens ein Formwerkzeugteil (3) mindestens zwei Formwerkzeugteilsegmente (3.1 - 3.3) umfasst, die jeweils einen Hohlraumabschnitt des Hohlraums (2.1) des Formwerkzeugs (2) umfassen; und
b) Herstellung des Formwerkzeugs (2) durch Verbindung der mindestens zwei Formwerkzeugteilsegmente (3.1 - 3.3) mit mindestens einem Verbindungselement (4), wobei die mindestens zwei Formwerkzeugteilsegmente (3.1 - 3.3) über das mindestens ein Verbindungselement (4) in einer definierten räumlichen Ausrichtung und/oder Position relativ zueinander angeordnet sind, was zu einer Hohlraumkonfiguration führt, die Verformungseffekte des formbaren Materials beim Formen im Hohlraum ausgleicht (2.1).

13. Verfahren nach Anspruch 12, bei dem die definierte räumliche Ausrichtung und/oder Position der mindestens zwei Formwerkzeugteilsegmente (3.1 - 3.3) relativ zueinander auf der Grundlage von Versuchsdaten und/oder Simulationsdaten bestimmt wird, die auf Verformungseffekte, insbesondere Schrumpfungseffekte, insbesondere thermische Schrumpfungseffekte des formbaren Materials beim Formen im Hohlraum (2.1) hinweisen.

14. Verfahren zum Herstellen eines Formwerkzeugs (2), insbesondere eines Serienformwerkzeugs, für eine Vorrichtung (1) zum Herstellen eines Bauteils aus einem formbaren Material, wobei das Formwerkzeug einen Hohlraum (2.1) aufweist, der die Form des mit der Vorrichtung (1) herzustellenden Bauteils definiert, wobei das Verfahren die Schritte umfasst von:
a) Bereitstellung eines Formwerkzeugs (2), hergestellt nach Anspruch 12 oder 13, und
b) Herstellung eines Formwerkzeugs auf der Grundlage der Konfiguration des Formwerkzeugs, die in Schritt b) vorgesehen ist.

## Revendications

1. Appareil (1) pour la fabrication d'un composant à partir d'un matériau moulable, en particulier un matériau de perle en polymère expansable ou expansé, l'appareil (1) comprenant un outil de moulage (2) comprenant une cavité (2.1),
l'outil de moulage (2) comprenant au moins une pièce d'outil de moulage (3), au moins une pièce d'outil de moulage (3) comprenant au moins deux segments de pièce d'outil de moulage (3.1 - 3.3) chacun comprenant une section de cavité de la cavité (2.1), dans laquelle:
au moins deux segments de pièces d'outils de moulage (3.1 - 3.3) sont reliés à au moins un élément de raccordement (4), dans lequel:
l'au moins un élément de raccordement (4) est configuré de manière à disposer les deux segments de pièces d'outils de moulage au moins (3.1 - 3.3) dans une orientation spatiale et/ou une position définie l'un par rapport à l'autre, ce qui donne une configuration de cavité qui compense les effets de déformation, en particulier dus aux effets de retrait, notamment dus aux effets de retrait thermique, du matériau moulé lors du moulage dans la cavité (2.1), **caractérisés en ce que**
au moins une pièce d'outil de moulage (3) comprend une structure de support (3.5) définissant un plan de base, dans laquelle la structure de support (3.5) est configurée pour supporter au moins deux segments de pièce d'outil de moulage (3.1 - 3.3), dans laquelle au moins un des deux segments de pièce d'outil de moulage (3.1 - 3.3) est fixé à la structure de support (3.5) via un dispositif de fixation (5) configuré pour fixer au moins un segment de pièce d'outil de moulage (3.1 - 3.3) dans au moins deux orientations et/ou positions différentes par rapport au plan de base défini par la structure de support (3.5).

2. Appareil de la revendication 1, dans lequel au moins un élément de connexion (4) comprend un corps de base (4.2) comprenant au moins une partie de support (4.3 - 4.5) pour soutenir un premier segment de pièce d'outil de moulage (3.1 - 3.3) dans une orientation spatiale et/ou une position définies par rapport à au moins un deuxième segment de pièce d'outil de moulage (3.1 - 3.3) de l'au moins une pièce d'outil de moulage (3), ce qui entraîne la configuration de la cavité qui compense les effets de déformation du matériau moulable lors du moulage dans la cavité (2.1).

3. L'appareil de la revendication 2, dans lequel au moins une partie de support (4.3 - 4.5) est façonnée sur la base de données relatives à une orientation et/ou position définie d'un premier segment de pièce d'outil de moulage (3.1 - 3.3) par rapport à au moins un second segment de pièce d'outil de moulage (3.1 - 3.3) d'au moins une partie d'outil de moulage (3) d'une configuration de cavité, compense les effets de déformation du matériau moulable lors du moulage dans la cavité (2.1).

4. Appareil de la revendication 2 ou 3, dans lequel au moins un élément de connexion (4) comprend une première partie de support (4.3 - 4.5) pour soutenir un premier segment de pièce d'outil de moulage (3.1 - 3.3) et au moins une seconde partie de support (4.3 - 4.5) pour soutenir un deuxième segment de pièce d'outil de moulage (3.1 - 3.3).

5. Appareil de la revendication 4, dans lequel la première partie de support (4.3 - 4.5) est disposée dans au moins un premier plan spatial et/ou s'étend dans une première direction spatiale, et la partie de support (4.3 - 4.5) est disposée dans au moins un second plan spatial égal ou différent de la première direction spatiale et/ou s'étend dans une seconde direction spatiale égale ou différente du premier plan spatial.

6. Appareil de la revendication 4 ou 5, dans lequel la première partie de support (4.3 - 4.5) comprend une première géométrie de section transversale, et la partie de support d'au moins une seconde (4.3 - 4.5) comprend une seconde géométrie de section transversale égale ou différente de la première section transversale.

7. Appareil de l'une quelconque des revendications 4 à 6, dans lequel au moins un élément de raccordement (4) présente au moins partiellement une géométrie transversale en forme de T ou de T.

8. Appareil de l'une quelconque des revendications 4 à 7, dans lequel au moins un élément de connexion a une forme de base en forme de barre.

9. Appareil de l'une quelconque des revendications 4 à 8, dans lequel au moins un élément de connexion (4) comprend une interface de connexion (4.1), en particulier une ouverture pour recevoir un élément de fixation, pour connecter au moins un élément de connexion (4) à au moins un segment de pièce d'outil de moulage (3.1 - 3.3).

10. Appareil de l'une quelconque des revendications précédentes, dans lequel au moins une partie d'outil de moulage (3) comprend une structure de support (3.5) définissant un plan de base, dans laquelle la structure de support (3.5) est configurée pour supporter au moins deux segments de pièce d'outil de moulage (3.1 - 3.3), comprenant en outre au moins un élément d'écartement (6) qui permet de modifier la distance, en particulier la distance dans une direction normale au plan de base de la structure de support (3.5), entre une surface du plan de base de la structure de support (3.5) et une surface du plan de base du segment d'outil de moulage respectif (3.1 - 3.3).

11. Appareil de l'une quelconque des revendications précédentes, dans lequel au moins une pièce d'outil de moulage (3) comprend au moins un élément de montage (7), en particulier en forme de tige, pour le montage d'au moins un des deux segments de pièce d'outil de moulage (3.1 - 3.3) sur une structure de montage (3.6), dans lequel au moins un élément de montage (7) comprend au moins deux segments d'élément de montage interconnectables ou interconnectés pour fournir un élément de montage (7) de dimensions réglables, en particulier de dimensions longitudinales réglables.

12. Méthode de fabrication d'un outil de moulage (2), en particulier d'un outil de moulage de prototypage, pour un appareil (1) destiné à la fabrication d'un composant à partir d'un matériau moulable selon la revendication 1, l'outil de moulage (2) comprenant une cavité (2.1) définissant la forme du composant à fabriquer avec l'appareil (1), la méthode comprenant les étapes suivantes:
a) fournir un outil de moulage (2) comprenant au moins une pièce d'outil de moulage (3), au moins une pièce d'outil de moulage (3) comprenant au moins deux segments de pièce d'outil de moulage (3.1 - 3.3) chacun comprenant une section de cavité de la cavité (2.1) de l'outil de moulage (2); et
b) la fabrication de l'outil de moulage (2) en reliant au moins deux segments de pièces d'outils de moulage (3.1 - 3.3) à au moins un élément de connexion (4), dans lequel les au moins deux segments de pièces d'outils de moulage (3.1 - 3.3) sont disposés, via au moins un élément de connexion (4), dans une orientation spatiale et/ou une position définies l'une par rapport à l'autre, ce qui entraîne une configuration de la cavité qui compense les effets de déformation du matériau moulable lors du moulage dans la cavité (2.1).

13. Méthode selon la revendication 12, dans laquelle l'orientation spatiale définie et/ou la position d'au moins deux segments de pièces d'outils de moulage (3.1 - 3.3) l'un par rapport à l'autre est déterminée sur la base de données expérimentales et/ou de données de simulation indiquant les effets de déformation, en particulier les effets de retrait, plus particulièrement les effets de retrait thermique, du matériau moulé dans la cavité (2.1).

14. Méthode de fabrication d'un outil de moulage (2), en particulier d'un outil de moulage en série, pour un appareil (1) destiné à la fabrication d'un composant à partir d'un matériau moulable, l'outil de moulage comprenant une cavité (2.1) définissant la forme du composant à fabriquer avec l'appareil (1), la méthode comprenant les étapes de:
a) fournir un outil de moulage (2) fabriqué conformément à la revendication 12 ou 13, et
b) la fabrication d'un outil de moulage basé sur la configuration de l'outil de moulage fournie à l'étape b).
